# EUROPÄISCHE PATENTSCHRIFT

(11) **EP 3 519 241 B1**
(45) Veröffentlichungstag und Bekanntmachung des Hinweises auf die Patenterteilung: **12.04.2023**
(21) Anmeldenummer: 17755101.7
(22) Anmeldetag: 08.08.2017
(51) Int. Cl.: B60L 7/10, B60L 50/51, B60L 53/20, B60L 58/15

(54) **STROMRICHTER, ELEKTRISCHES ANTRIEBSSYSTEM UND VERFAHREN ZUM AUFLADEN EINES ELEKTRISCHEN ENERGIESPEICHERS**
CONVERTER, ELECTRICAL DRIVE SYSTEM, AND METHOD FOR CHARGING AN ELECTRICAL ENERGY STORE
CONVERTISSEUR, SYSTÈME D'ENTRAÎNEMENT ÉLECTRIQUE ET PROCÉDÉ DE CHARGE D'UN ACCUMULATEUR D'ÉNERGIE ÉLECTRIQUE

(30) Priorität: 27.09.2016 DE 102016218599
(43) Veröffentlichungstag der Anmeldung: 07.08.2019
(73) Patentinhaber: Robert Bosch GmbH, 70442 Stuttgart (DE)
(72) Erfinder: EINSELE, Florian, 70174 Stuttgart (DE); HEIDRICH, Torsten, 71665 Vaihingen/Enz (DE)
(86) Internationale Anmeldenummer: PCT/EP2017/070058
(87) Internationale Veröffentlichungsnummer: WO 2018/059808

(56) Entgegenhaltungen:
- EP-A2- 1 006 655
- US-A1- 2009 243 523
- US-A1- 2014 232 304

## Beschreibung

Die vorliegende Erfindung betrifft einen Stromrichter zum Aufladen eines elektrischen Energiespeichers, ein elektrisches Antriebssystem mit einem Stromrichter sowie ein Verfahren zum Aufladen eines elektrischen Energiespeichers.

### Stand der Technik

In elektrischen Antriebssystemen, wie sie beispielsweise in Elektro- oder Hybridfahrzeugen eingesetzt werden, kann eine elektrische Maschine von einem Wechselrichter angesteuert werden. Während des Betriebs ist der Wechselrichter mit einer elektrischen Energiequelle, wie zum Beispiel einer Traktionsbatterie, verbunden. Zwischen der elektrischen Energiequelle und dem Wechselrichter ist eine Trennvorrichtung vorgesehen, die die elektrische Verbindung zwischen der Energiequelle und dem Wechselrichter unterbrechen kann. In einem generatorischen Betrieb kann die elektrische Maschine über den Wechselrichter Leistung in Richtung der elektrischen Energiequelle einspeisen. Der Wechselrichter arbeitet dabei in diesem Betriebsmodus als gesteuerter Gleichrichter.

Während des Einspeisens von elektrischer Energie aus der elektrischen Maschine in die Traktionsbatterie kann die elektrische Verbindung zwischen Traktionsbatterie und Wechselrichter durch die Trennvorrichtung unterbrochen werden. Die elektrische Energie von der Maschine fließt dabei zunächst in einen Zwischenkreiskondensator des Wechselrichters und es kommt zu einem Spannungsanstieg an diesem Zwischenkreiskondensator. Überschreitet die Spannung an dem Zwischenkreiskondensator einen vorgegebenen Wert, so kann der generatorische Betrieb der elektrischen Maschine beendet werden.

Die Druckschrift DE 10 2013 215 704 A1 offenbart ein Batteriesystem mit einer Batterietrenneinheit und einer Batteriesteuereinheit. Die Batterietrenneinheit dient zum Trennen einer Batterieanordnung von einem Verbraucher. Die Batterietrenneinheit ist mit einer Batteriesteuereinheit zum Steuern des Betriebs der Batterieanordnung in einer Baugruppe zusammengefasst.

Die Druckschrift DE 10 2008 004 202 A1 offenbart ein Verfahren zur Erkennung eines Kurzschlusses und/oder einer Unterbrechung einer elektrischen Leitung für ein Fahrzeug. Hierzu wird ein Signalmuster auf eine elektrische Leitung aufmoduliert, welches durch einen Leitungszustand beeinflusst wird. In Abhängigkeit von dieser Beeinflussung erfolgt eine Erkennung eines Kurzschlusses und/oder einer Unterbrechung der Leitung.

Die Druckschrift EP 1 006 655 A2 beschreibt eine Schutzschaltung für einen Leistungshalbleiter mit einem integrierten Sensor zu Überwachen eines Betriebsparameters auf Überlastung und zum Abschalten des Leistungshalbleiter beim Erreichen oder Überschreiten eines vorgegebenen Überlastwerts.

### Offenbarung der Erfindung

Die vorliegende Erfindung offenbart einen Stromrichter, ein elektrisches Antriebssystem und ein Verfahren zum Aufladen eines elektrischen Energiespeichers mit den Merkmalen der unabhängigen Patentansprüche. Weitere vorteilhafte Ausführungsformen sind Gegenstand der abhängigen Patentansprüche.

### Demgemäß ist vorgesehen:

Einen Stromrichter zum Aufladen eines elektrischen Energiespeichers. Der elektrische Energiespeicher kann über einen Trennschalter mit dem Stromrichter gekoppelt werden. Der Stromrichter umfasst eine Detektoreinrichtung. Die Detektoreinrichtung ist dazu ausgelegt, ein Öffnen des Trennschalters zwischen dem Stromrichter und dem elektrischen Energiespeicher zu detektieren. Der Stromrichter ist ferner dazu ausgelegt, ein Bereitstellen von elektrischer Energie für den elektrischen Energiespeicher zu unterbrechen, wenn die Detektoreinrichtung ein Öffnen des Trennschalters detektiert.

Der vorliegenden Erfindung liegt daher die Idee zugrunde, dieser Erkenntnis Rechnung zu tragen und bei einer Unterbrechung der elektrischen Verbindung zwischen Stromrichter und elektrischem Energiespeicher den Energiefluss ausreichend rasch zu unterbinden, dass ein Spannungsanstieg über eine gefährliche, bauteilschädigende Grenze vermieden werden kann.

Hierzu ist es vorgesehen, in dem Stromrichter die elektrische Verbindung zwischen dem Stromrichter und der aufzuladenden elektrischen Energiequelle kontinuierlich zu überwachen und eine Unterbrechung, wie sie beispielsweise durch das Öffnen eines Trennschalters zwischen dem Stromrichter und dem Energiespeicher auftreten kann, sofort zu erkennen. Wird ein solches Öffnen des Trennschalters erkannt, so unterbricht der Stromrichter daraufhin unmittelbar das Bereitstellen von elektrischer Energie für den elektrischen Energiespeicher. Durch das rasche Unterbrechen des Aufladevorgangs wird dabei ein Aufladen des Zwischenkreiskondensators in dem Stromrichter auf einen gefährlich hohen Spannungswert verhindert. Somit bleibt die elektrische Spannung am Zwischenkreis auf einem beherrschbaren Spannungswert, der zu keiner Beschädigung der angeschlossenen Bauteile führt. Auf diese Weise kann ein Ausfall oder eine Reduktion der Lebensdauer des Stromrichters vermieden werden. Weitere kostenintensive und gegebenenfalls fehleranfällige Schutzmaßnahmen zur Vermeidung von Spannungsüberhöhungen sind dabei nicht erforderlich. Folglich sinken die Herstellungskosten und auch der erforderliche Bauraum des Stromrichters kann gesenkt werden.

Die Detektoreinrichtung umfasst eine Vorrichtung zur Detektion eines Schaltzustands des Trennschalters. An dem Trennschalter ist ein zusätzlicher Kontakt oder eine weitere Sensorvorrichtung vorgesehen, die eine Information über den Schaltzustand des Trennschalters bereitstellt. Diese Information kann von der Detektoreinrichtung des Stromrichters ausgewertet werden.

Gemäß einer Ausführungsform umfasst die Detektoreinrichtung eine Vorrichtung zur Überwachung einer Leitung zwischen dem Stromrichter und dem elektrischen Energiespeicher. Insbesondere kann durch die Überwachung der Leitung zwischen dem Stromrichter und dem elektrischen Energiespeicher eine mögliche Unterbrechung durch ein Öffnen des Trennschalters unmittelbar detektiert werden.

Gemäß einer Ausführungsform umfasst die Detektoreinrichtung eine Vorrichtung zur Auswertung eines Ansteuersignals für den Trennschalter. Durch das Auswerten eines Ansteuersignals für den Trennschalter sind keine weiteren baulichen Maßnahmen oder Schaltungen zur Bestimmung des Schaltzustands des Trennschalters erforderlich. Gemäß einer Ausführungsform des elektrischen Antriebssystems ist der Trennschalter mittels einer Signalleitung mit der Detektoreinrichtung verbunden. Über diese Signalleitung kann eine Information über den aktuellen Schaltzustand des Trennschalters unmittelbar an der Detektoreinrichtung bereitgestellt werden.

Gemäß einer Ausführungsform umfasst das elektrische Antriebssystem eine Steuereinrichtung. Diese Steuereinrichtung ist dazu ausgelegt, den Trennschalter des Energiespeichersystems anzusteuern. Ferner ist die Steuereinrichtung mit der Detektoreinrichtung verbunden. Auf diese Weise kann die Information über die Ansteuerung des Trennschalters direkt der Detektoreinrichtung bereitgestellt werden.

Gemäß einer Ausführungsform ist der Stromrichter dazu ausgelegt, an der elektrischen Maschine einen sicheren Betriebszustand einzustellen, wenn ein Öffnen des Trennschalters detektiert worden ist. Insbesondere kann dieser sichere Betriebszustand einen aktiven Kurzschluss für die elektrische Maschine umfassen.

Gemäß einer Ausführungsform des Verfahrens zum Aufladen des elektrischen Energiespeichers umfasst der Schritt zum Überwachen des Schaltzustands des Trennschalters ein Überwachen der elektrischen Verbindung zwischen dem Stromrichter und dem elektrischen Energiespeicher. Zusätzlich oder alternativ kann der Schritt zum Überwachen des Schaltzustands auch ein Überwachen einer Ansteuerung des Trennschalters umfassen.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den

Ausführungsbeispielen beschriebenen Merkmalen der Erfindung, die in den Bereich der beigefügten Patentansprüche fallen.

### Kurze Beschreibung der Zeichnungen

Die vorliegende Erfindung wird nachfolgend anhand der in den schematischen Figuren der Zeichnungen angegebenen Ausführungsbeispiele näher erläutert. Dabei zeigen:
- Figur 1:: eine schematische Darstellung eines elektrischen Antriebssystems mit einem Stromrichter gemäß einer Ausführungsform; und
- Figur 2:: eine schematische Darstellung eines Ablaufdiagramms, wie es einem Verfahren gemäß einer Ausführungsform zugrunde liegt.

### Ausführungsformen der Erfindung

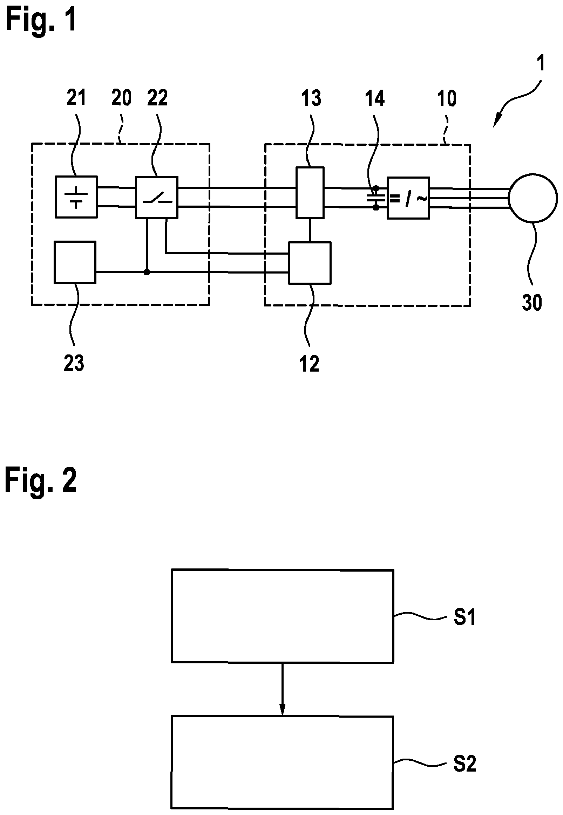

Figur 1 zeigt eine schematische Darstellung eines elektrischen Antriebssystems 1 gemäß einer Ausführungsform. Das elektrische Antriebssystem 1 umfasst eine elektrische Maschine 30, einen Stromrichter 10 und ein elektrisches Energiespeichersystem 20. Bei der elektrischen Maschine 30 kann es sich um eine beliebige elektrische Maschine, wie zum Beispiel eine permanenterregte Synchronmaschine oder eines Asynchronmaschine handeln. Grundsätzlich sind darüber hinaus auch beliebige weitere elektrische Maschinen möglich, die in einem Generatorbetrieb elektrische Energie bereitstellen können. Die elektrische Maschine 30 ist mit einem Stromrichter 10 gekoppelt. In einem Motorbetrieb der elektrischen Maschine 30 kann die elektrische Maschine 30 durch den Stromrichter 10 durch Bereitstellen von vorbestimmten Strömen und/oder Spannungen angesteuert werden. In einem Generatorbetrieb stellt die elektrische Maschine 30 elektrische Energie an dem Stromrichter 10 bereit.

Ferner ist der Stromrichter 10 mit einem elektrischen Energiespeichersystem 20 verbunden. Das elektrische Energiespeichersystem 20 umfasst eine elektrische Energiequelle 21, die über einen Trennschalter 22 mit dem Stromrichter 10 verbunden ist. Bei der elektrischen Energiequelle 21 kann es sich beispielsweise um eine Traktionsbatterie eines Elektro- oder Hybridfahrzeuges handeln. Darüber hinaus sind beliebige weitere elektrische Energiespeicher möglich, die dazu ausgelegt sind, elektrische Energie an dem Stromrichter 10 bereitzustellen und in einem Ladebetrieb die von dem Stromrichter 10 bereitgestellte elektrische Energie aufzunehmen. Der Trennschalter 21 zwischen dem elektrischen Energiespeicher 21 und dem Stromrichter 10 kann eine elektrische Verbindung zwischen der elektrischen Energiequelle 21 und dem Stromrichter 10 bei Bedarf unterbrechen. Hierzu kann der Trennschalter 21 beispielsweise von einer Steuereinrichtung 23 des elektrischen Energiespeichersystems 20 angesteuert werden. Bei der Steuereinrichtung 23 kann es sich beispielsweise um ein Batteriemanagementsystem oder ähnliches handeln.

In dem hier dargestellten Ausführungsbeispiel kann es sich bei dem Stromrichter 10 beispielsweise um einen dreiphasigen Wechselrichter handeln, der aus einer von dem elektrischen Energiespeichersystem 20 bereitgestellten Gleichspannung eine dreiphasige Wechselspannung generiert und diese Wechselspannung an der elektrischen Maschine 30 bereitstellt. Die vorliegende Erfindung ist jedoch nicht auf solche dreiphasige Wechselrichter begrenzt. Darüber hinaus sind auch beliebige ein- oder mehrphasige Wechselrichter je nach angeschlossener elektrischer Maschine 30 möglich. Grundsätzlich ist jeder Stromrichter 10 möglich, der auf die von dem elektrischen Energiespeichersystem 20 bereitgestellte Spannung und die Anforderungen der elektrischen Maschine 30 angepasst ist.

Der Stromrichter 10 weist weiterhin eine Detektoreinrichtung 12 auf. Diese Detektoreinrichtung 12 überwacht während des Einspeisens von elektrischer Energie von dem Stromrichter 10 in den elektrischen Energiespeicher 21 die elektrische Verbindung zwischen dem Stromrichter 10 und dem elektrischen Energiespeicher 21. Wird dabei durch die Detektoreinrichtung 12 festgestellt, dass die elektrische Verbindung zwischen dem Stromrichter 10 und dem elektrischen Energiespeicher 21 unterbrochen wird, so wird daraufhin der Stromrichter 10 veranlasst, ein weiteres Bereitstellen von elektrischer Energie für den elektrischen Energiespeicher 21 zu unterbinden. Würde der Stromrichter 10 bei einer Unterbrechung der elektrischen Verbindung zwischen dem Stromrichter 10 und dem elektrischen Energiespeicher 21 weiterhin elektrische Energie bereitstellen, so würde diese elektrische Energie in den Zwischenkreiskondensator 14 des Stromrichters 10 fließen. Dies würde zu einem raschen Spannungsanstieg über dem Zwischenkreiskondensator 14 führen. Durch ein rasches Unterbrechen des weiteren Bereitstellens von elektrischer Energie durch den Stromrichter 10 nach einer Unterbrechung der elektrischen Verbindung zwischen dem Stromrichter 10 und dem elektrischen Energiespeicher 21 kann ein übermäßiger Anstieg der elektrischen Spannung über den Zwischenkreiskondensator 14 verhindert werden.

Insbesondere kann der Stromrichter 10 nach der Detektion einer Unterbrechung der elektrischen Verbindung zwischen dem Stromrichter 10 und dem elektrischen Energiespeicher 21 einen Schaltzustand für einen sicheren Betriebszustand der angeschlossenen elektrischen Maschine 30 einnehmen. Dieser sichere Betriebszustand kann beispielsweise einen aktiven Kurzschluss oder einen Freilauf umfassen.

Die Detektoreinrichtung 12 kann die elektrische Verbindung zwischen dem Stromrichter 10 und dem elektrischen Energiespeicher 21 beispielsweise durch Aufmodulation eines Hochfrequenzsignals und Detektion von Leitungsreflexionen überwachen. Wird hierbei eine Unterbrechung der elektrischen Verbindung zwischen Stromrichter 10 und elektrischer Energiespeicher 21, insbesondere ein Öffnen des Trennschalters 22 detektiert, so kann daraufhin das weitere Bereitstellen von elektrischer Energie durch den Stromrichter 10 unterbrochen werden und gegebenenfalls die elektrische Maschine 30 in einen sicheren Betriebszustand gebracht werden.

Darüber hinaus sind selbstverständlich auch beliebige weitere Verfahren zur Überwachung der Verbindung zwischen dem Stromrichter 10 und der elektrischen Energiequelle 21 und zur Detektion von Unterbrechungen in dieser Verbindung möglich. Aufgrund der sehr hohen Ausbreitungsgeschwindigkeit der aufmodulierten Hochfrequenzsignale kann dabei eine sehr rasche Detektion von auftretenden Unterbrechungen, wie z.B. dem Öffnen des Trennschalters 22, erfolgen. Hierdurch kann auch das weitere Bereitstellen von elektrischer Energie durch den Stromrichter 10 rasch unterbunden werden, so dass es zu keinem gefährlichen Spannungsanstieg über dem Zwischenkreiskondensator 14 kommt.

Es ist auch möglich, den Schaltzustand des Trennschalters 22 zu überwachen. Hierzu wird mittels eines zusätzlichen Schaltkontakts an dem Trennschalter 22 der aktuelle Schaltzustand des Trennschalters 22 erfasst. Ferner sind auch beliebige weitere Sensoren zur Überwachung des Schaltzustands des Trennschalters 22 möglich. Der erfasste Schaltzustand des Trennschalters 22 kann z.B. über eine zusätzliche Signalleitung an der Detektoreinrichtung 12 bereitgestellt werden. Basierend auf dem durch diese Signalleitung übertragenen Signal kann die Detektoreinrichtung 12 ein Öffnen des Trennschalters 22 unmittelbar erkennen und daraufhin den Stromrichter 10 veranlassen, ein weiteres Bereitstellen von elektrischer Energie zu unterbinden und gegebenenfalls die elektrische Maschine 30 in einen sicheren Betriebszustand zu schalten.

Weiterhin ist es auch möglich, unmittelbar ein Ansteuersignal des Trennschalters 22 auch an der Detektoreinrichtung 12 über eine geeignete Signalleitung bereitzustellen. Daraufhin kann die Detektoreinrichtung 12 das Ansteuersignal für den Trennschalter 22 direkt auswerten und hieraus ein Öffnen des Trennschalters 22 erkennen. Beispielsweise kann der Trennschalter 22 von einer Steuereinrichtung 23, wie z.B. einem Batteriemanagementsystem o.ä., angesteuert werden. Dieses Signal von der Steuereinrichtung 23 kann parallel auch der Detektoreinrichtung 12 bereitgestellt werden. Alternativ ist es auch möglich, ein zusätzliches Steuersignal von der Steuereinrichtung 23 an der Detektoreinrichtung 12 bereitzustellen. Basierend auf diesem Steuersignal für den Trennschalter 22 kann die Detektoreinrichtung 12 den Stromrichter 10 veranlassen, ein weiteres Bereitstellen von elektrischer Energie für den elektrischen Energiespeicher 21 zu unterbrechen, wenn aufgrund des Steuersignals der Trennschalter 22 geöffnet werden soll. Zusätzlich kann auch hier in diesem Fall die elektrische Maschine 30 in einen sicheren Betriebszustand geschaltet werden.

Darüber hinaus sind selbstverständlich beliebige weitere Signalisierungen über den Schaltzustand des Trennschalters 22 an der Detektoreinrichtung 12 möglich. Hierbei muss jedoch stets gewährleistet werden, dass die Information über den Schaltzustand des Trennschalters 22 innerhalb einer vorgegebenen, sehr kurzen Zeitspanne, an der Detektoreinrichtung 12 bereitgestellt werden kann. Beispielsweise sollte die Signalisierung über ein Öffnen des Trennschalters 22 innerhalb einer Zeitspanne von weniger als 1 µs, zumindest jedoch innerhalb einer Zeit von weniger als 10 µs an der Detektoreinrichtung 12 bereitgestellt werden.

Figur 2 zeigt eine schematische Darstellung eines Ablaufdiagramms, wie es einem Verfahren zum Aufladen eines elektrischen Energiespeichers gemäß einer Ausführungsform zugrunde liegt. Das Verfahren wird hierbei durch die zuvor beschriebene Konfiguration aus elektrischem Energiespeichersystem, Stromrichter und elektrischer Maschine im Generatorbetrieb ausgeführt. Dabei befindet sich die elektrische Maschine 30 im Generatorbetrieb und stellt elektrische Energie an den Stromrichter 10 bereit. Der Stromrichter 10 konvertiert die bereitgestellte elektrische Energie in eine Spannung, die dazu geeignet ist, einen elektrischen Energiespeicher 21 in dem Energiespeichersystem 20 aufzuladen. Während dieses Aufladens des elektrischen Energiespeichers 21 wird in Schritt S1 der Schaltzustand des Trennschalters 22 zwischen dem elektrischen Energiespeicher 21 und dem Stromrichter 10 überwacht. Vorzugsweise erfolgt hierbei ein kontinuierliches Überwachen des Schaltzustands des Trennschalters. Grundsätzlich ist jedoch auch ein periodisches Überwachen des Schaltzustands des Trennschalters mit einer möglichst kurzen Periodendauer, vorzugsweise kleiner 1 µs, möglich.

Wird während des Überwachens des Schaltzustands des Trennschalters 22 detektiert, dass der Trennschalter 22 geöffnet wird, so erfolgt in Schritt S2 ein Unterbrechen des Bereitstellens von elektrischer Energie für den elektrischen Energiespeicher 22 durch den Stromrichter 10. Hierbei ist es insbesondere möglich, die elektrische Maschine 30 nach einer Detektion des Öffnens des Trennschalters 22 in einen sicheren Betriebszustand, wie beispielsweise einen Freilauf oder einen aktiven Kurzschluss zu schalten.

Zusammenfassend betrifft die vorliegende Erfindung das Aufladen eines elektrischen Energiespeichers mittels eines Stromrichters. Hierbei überwacht der Stromrichter die elektrische Verbindung zwischen dem Stromrichter und dem aufzuladenden elektrischen Energiespeicher. Wird eine Unterbrechung der elektrischen Verbindung zwischen dem Stromrichter und dem elektrischen Energiespeicher detektiert, beispielsweise das Öffnen eines Trennschalters zwischen dem elektrischen Energiespeicher und dem Stromrichter, so wird das weitere Bereitstellen von elektrischer Energie für das Aufladen des elektrischen Energiespeichers durch den Stromrichter sofort unterbunden. Auf diese Weise können gefährliche Spannungsüberhöhungen an dem Stromrichter vermieden werden.

## Patentansprüche

1. Stromrichter (10) zum Aufladen eines über einen Trennschalter (22) mit dem Stromrichter (10) koppelbaren elektrischen Energiespeichers (21), mit:
einer Detektoreinrichtung (12), die dazu ausgelegt ist, ein Öffnen des Trennschalters (22) zu detektieren;
wobei der Stromrichter (10) dazu ausgelegt ist, ein Bereitstellen von elektrischer Energie für den elektrischen Energiespeicher (21) zu unterbrechen, wenn die Detektoreinrichtung (12) ein Öffnen des Trennschalters (22) detektiert,
**dadurch gekennzeichnet, dass**
die Detektoreinrichtung (12) einen zusätzlichen Schaltkontakt an dem Trennschalter (22) umfasst, der dazu ausgelegt ist, eine Information über den Schaltzustand des Trennschalters (22) bereitzustellen, und wobei die Detektoreinrichtung (12) dazu ausgelegt ist, die von dem zusätzlichen Schaltkontakt bereitgestellte Information auszuwerten.

2. Stromrichter (10) nach Anspruch 1, wobei die Detektoreinrichtung (12) eine Vorrichtung zur Überwachung einer Leitung zwischen dem Stromrichter (10) und dem elektrischen Energiespeicher (21) umfasst.

3. Stromrichter (10) nach Anspruch 1 oder 2, wobei die Detektoreinrichtung (12) eine Vorrichtung zur Auswertung eines Ansteuersignals für den Trennschalter (22) umfasst.

4. Elektrisches Antriebssystem (1), mit
einem Stromrichter (10) nach einem der Ansprüche 1 bis 3;
einer elektrischen Maschine (30), die mit dem Stromrichter (10) elektrisch gekoppelt ist, und die dazu ausgelegt ist, in einem Generatorbetrieb elektrische Energie bereitzustellen;
einem Energiespeichersystem (20), mit einem elektrischen Energiespeicher (21) und einem Trennschalter (22), wobei der elektrische Energiespeicher (21) über den Trennschalter (22) mit dem Stromrichter (10) elektrisch koppelbar ist.

5. Elektrisches Antriebssystem (1) nach Anspruch 4, wobei der Trennschalter (22) mittels einer Signalleitung mit der Detektoreinrichtung (12) verbunden ist.

6. Elektrisches Antriebssystem nach Anspruch 4 oder 5, mit einer Steuereinrichtung (23), die dazu ausgelegt ist, den Trennschalter (22) des Energiespeichersystems (20) anzusteuern, wobei die Steuereinrichtung (23) ferner mit der Detektoreinrichtung (12) verbunden ist.

7. Elektrisches Antriebssystem (1) nach einem der Ansprüche 4 bis 6, wobei der Stromrichter (10) dazu ausgelegt ist, an der elektrischen Maschine (30) einen sicheren Betriebszustand einzustellen, wenn ein Öffnen des Trennschalters (22) detektiert worden ist.

8. Verfahren zum Aufladen eines elektrischen Energiespeichers (21) mittels eines über einen Trennschalter (22) mit dem Energiespeicher (21) gekoppelten Stromrichter (10), mit den Schritten:
Überwachen (S1) des Schaltzustands des Trennschalters (22) während eines Bereitstellens von elektrischer Energie für den elektrischen Energiespeicher (21);
Unterbrechen (S2) des Bereitstellens elektrischer Energie für die elektrischen Energiespeicher (21), wenn der Trennschalter (22) zwischen dem Stromrichter (10) und dem elektrischen Energiespeicher (21) geöffnet wird,
**dadurch gekennzeichnet, dass**
das Überwachen (S1) des Schaltzustands des Trennschalters (22) ein Überwachen eines zusätzlichen Schaltkontakts an dem Trennschalter (22) umfasst.

9. Verfahren nach Anspruch 8, wobei das Überwachen (S1) des Schaltzustands des Trennschalters (22) ein Überwachen der elektrischen Verbindung zwischen dem Stromrichter (10) und dem elektrischen Energiespeicher (21) und/oder eine Überwachen der Ansteuerung des Trennschalters (22) umfasst.

## Claims

1. Power converter (10) for charging an electrical energy store (21) which is able to be coupled to the power converter (10) via a circuit breaker (22), comprising:
a detector apparatus (12) which is designed to detect an opening of the circuit breaker (22);
wherein the power converter (10) is designed to interrupt a provision of electrical energy to the electrical energy store (21) if the detector apparatus (12) detects an opening of the circuit breaker (22),
**characterized in that**
the detector apparatus (12) comprises an additional switching contact at the circuit breaker (22) which is designed to provide information about the switching state of the circuit breaker (22), and wherein the detector apparatus (12) is designed to evaluate the information provided by the additional switching contact.

2. Power converter (10) according to Claim 1, wherein the detector apparatus (12) comprises a device for monitoring a line between the power converter (10) and the electrical energy store (21).

3. Power converter (10) according to Claim 1 or 2, wherein the detector apparatus (12) comprises a device for evaluating an activation signal for the circuit breaker (22).

4. Electrical drive system (1), comprising
a power converter (10) according to one of Claims 1 to 3;
an electric machine (30) which is electrically coupled to the power converter (10) and which is designed to provide electrical energy in a generator mode;
an energy storage system (20), comprising an electrical energy store (21) and a circuit breaker (22), wherein the electrical energy store (21) is able to be electrically coupled to the power converter (10) via the circuit breaker (22).

5. Electrical drive system (1) according to Claim 4, wherein the circuit breaker (22) is connected to the detector apparatus (12) by means of a signal line.

6. Electrical drive system according to Claim 4 or 5, comprising a control apparatus (23) which is designed to activate the circuit breaker (22) of the energy storage system (20), wherein the control apparatus (23) is also connected to the detector apparatus (12).

7. Electrical drive system (1) according to one of Claims 4 to 6, wherein the power converter (10) is designed to set a safe operating state at the electric machine (30) if an opening of the circuit breaker (22) has been detected.

8. Method for charging an electrical energy store (21) by means of a power converter (10) which is coupled to the energy store (21) via a circuit breaker (22), comprising the steps of:
monitoring (S1) the switching state of the circuit breaker (22) during a provision of electrical energy to the electrical energy store (21);
interrupting (S2) the provision of electrical energy to the electrical energy store (21) if the circuit breaker (22) between the power converter (10) and the electrical energy store (21) is opened,
**characterized in that**
the monitoring (S1) of the switching state of the circuit breaker (22) comprises monitoring an additional switching contact at the circuit breaker (22).

9. Method according to Claim 8, wherein the monitoring (S1) of the switching state of the circuit breaker (22) comprises monitoring the electrical connection between the power converter (10) and the electrical energy store (21) and/or monitoring the activation of the circuit breaker (22).

## Revendications

1. Convertisseur de courant (10) destiné à charger un accumulateur d'énergie électrique (21) pouvant être connecté au convertisseur de courant (10) par le biais d'un sectionneur (22), comprenant :
un dispositif détecteur (12), qui est conçu pour détecter une ouverture du sectionneur (22) ;
le convertisseur de courant (10) étant conçu pour interrompre une fourniture d'énergie électrique pour l'accumulateur d'énergie électrique (21) lorsque le dispositif détecteur (12) détecte une ouverture du sectionneur (22),
**caractérisé en ce que**
le dispositif détecteur (12) comporte un contact de commutation supplémentaire au niveau du sectionneur (22), qui est conçu pour fournir une information à propos de l'état de commutation du sectionneur (22) et le dispositif détecteur (12) étant conçu pour interpréter l'information fournie par le contact de commutation supplémentaire.

2. Convertisseur de courant (10) selon la revendication 1, le dispositif détecteur (12) comportant un arrangement pour la surveillance d'une ligne entre le convertisseur de courant (10) et l'accumulateur d'énergie électrique (21).

3. Convertisseur de courant (10) selon la revendication 1 ou 2, le dispositif détecteur (12) comportant un arrangement pour l'interprétation d'un signal de commande pour le sectionneur (22).

4. Système d'entraînement électrique (1), comprenant un convertisseur de courant (10) selon l'une des revendications 1 à 3 ;
une machine électrique (30), qui est connectée électriquement au convertisseur de courant (10) et qui est conçue pour, dans un régime de générateur, fournir de l'énergie électrique ;
un système accumulateur d'énergie (20), comprenant un accumulateur d'énergie électrique (21) et un sectionneur (22), l'accumulateur d'énergie électrique (21) pouvant être connecté électriquement au convertisseur de courant (10) par le biais du sectionneur (22).

5. Système d'entraînement électrique (1) selon la revendication 4, le sectionneur (22) étant relié au dispositif détecteur (12) au moyen d'une ligne de signal.

6. Système d'entraînement électrique selon la revendication 4 ou 5, comprenant un dispositif de commande (23), qui est conçu pour commander le sectionneur (22) du système accumulateur d'énergie (20), le dispositif de commande (23) étant en outre relié au dispositif détecteur (12).

7. Système d'entraînement électrique (1) selon l'une des revendications 4 à 6, le convertisseur de courant (10) étant conçu pour établir un état opérationnel sécurisé au niveau de la machine électrique (30) lorsqu'une ouverture du sectionneur (22) a été détectée.

8. Procédé de charge d'un accumulateur d'énergie électrique (21) au moyen d'un convertisseur de courant (10) connecté à l'accumulateur d'énergie (21) par le biais d'un sectionneur (22), comprenant les étapes suivantes :
surveillance (S1) de l'état de commutation du sectionneur (22) pendant une fourniture d'énergie électrique pour l'accumulateur d'énergie électrique (21) ;
interruption (S2) de la fourniture d'énergie électrique pour l'accumulateur d'énergie électrique (21) lorsque le sectionneur (22) entre le convertisseur de courant (10)et l'accumulateur d'énergie électrique (21) est ouvert ;
**caractérisé en ce que**
la surveillance (S1) de l'état de commutation du sectionneur (22) comprend une surveillance d'un contact de commutation supplémentaire au niveau du sectionneur (22) .

9. Procédé selon la revendication 8, la surveillance (S1) de l'état de commutation du sectionneur (22) comprenant une surveillance de la liaison électrique entre le convertisseur de courant (10) et l'accumulateur d'énergie électrique (21) et/ou une surveillance de la commande du sectionneur (22).
